# NOUVEAU FASCICULE DE BREVET EUROPEEN

(11) **EP 1 053 531 B2**
(45) Date de publication et mention de la décision concernant l'opposition: **29.09.2010**
(45) Mention de la délivrance du brevet: 14.11.2001
(21) Numéro de dépôt: 99902596.8
(22) Date de dépôt: 04.02.1999
(51) Int. Cl.: G06K 19/07, G06K 19/073

(54) **DISPOSITIF A CIRCUIT INTEGRE SECURISE PAR ATTENUATION DE SIGNATURES ELECTRIQUES**
GESICHERTE INTEGRIERTE SCHALTUNGSANORDNUNG DURCH VERRINGERUNG DER ELEKTRISCHEN CHARAKERISTIKEN
DEVICE WITH INTEGRATED CIRCUIT MADE SECURE BY ATTENUATION OF ELECTRIC SIGNATURES

(30) Priorité: 04.02.1998 FR 9801305
(43) Date de publication de la demande: 22.11.2000
(73) Titulaire: Gemalto SA, 92190 Meudon (FR)
(72) Inventeur: BONVALOT, Béatrice, F-91440 Bures-sur-Yvette (FR); SERVEL, Eric, B.P.620-12, 92542 Montrouge Cedex (FR); LEYDIER, Robert, F-91400 Orsay (FR)
(74) Mandataire: Cour, Pierre
(86) Numéro de dépôt international: PCT/FR1999/000246
(87) Numéro de publication internationale: WO 1999/040538

(56) Documents cités:
- EP-A1- 1 010 543
- DE-A1- 3 903 454
- DE-A1- 4 230 148
- DE-A1- 4 301 039
- DE-A1- 19 503 607
- DE-A1- 19 536 169
- DE-U1- 9 421 565
- DE-U1- 29 602 609
- GB-A- 2 307 364
- US-A- 4 810 864
- US-A- 4 864 292
- US-A- 5 687 109
- US-A- 5 687 109
- S. SCHÜTT: 'Chipkarten', vol. 1, 1996, ISBN 3-486-23738-1 pages 126 - 129
- TIETZE, SCHENK: 'Halbleiter-Schaltungstechnik', vol. 10, 1993, ISBN 3-540-56184-6 pages 566 - 569
- BRUCE D. MOORE: 'Reglerstrukturen für batteriebetriebene Systeme' ELEKTRONIK vol. 2/1994, no. 2, Février 1994 - Février 1994, pages 94 - 100
- 'VLSI-Handbuch', 1989, ISBN 0-07-016903-9 pages 6.6 - 6.7
- BEUTELSPACHER ET AL: 'Chipkarten als Sicherheitswerkzeug', 1991, SPRINGER VERLAG, BERLIN HEIDELBERG NEW YORK, ISBN 3-540-54140-3 pages 10 - 11

## Description

L'invention concerne des dispositifs à circuit intégré destinés à être incorporés dans des objets portatifs à mémoire et, en particulier, dans de tels objets au format carte.

Les cartes à mémoire sont en général utilisées dans des applications dans lesquelles la sécurité du stockage et du traitement d'informations confidentielles sont essentielles. Ces cartes sont notamment destinées à des applications du domaine de la santé, à des applications de la télévision à péage, ou encore, à des applications dites de porte-monnaie électronique.

Elles se composent d'un corps de carte plastique dans lequel est incorporé un dispositif à circuit intégré. Il s'agit d'un module électronique comportant une puce à circuit intégré, ou alors, de la puce à circuit intégré elle-même.

Le suivi de l'intensité Idd du courant consommé par un dispositif à circuit intégré en fonction du temps constitue une signature de l'ensemble des tâches accomplies par ledit dispositif. L'analyse de cette signature électrique et, plus exactement, de sa forme, est révélatrice de l'activité du dispositif et permet d'avoir accès à des informations confidentielles contenues dans ledit dispositif.

De manière à éviter une telle analyse de signature, certains procédés de l'état de la technique proposent, dans un premier exemple, d'utiliser des algorithmes de programmation qui font notamment intervenir un déclenchement d'opérations à des moments pseudo-aléatoires ou proposent, dans un second exemple, de générer un bruit riche en informations aléatoires, ou alors, en opérations erronées.

Ces procédés de l'état de la technique comportent de multiples inconvénients. Ils monopolisent certaines ressources du dispositif, ressources qui pourraient être utilisées dans la réalisation d'autres opérations, et ne résistent pas à une analyse approfondie des signatures.

Considérant ce qui précède, un problème technique posé est : de sécuriser l'accès à des données confidentielles en rendant l'analyse des signatures électriques de dispositifs à circuit intégré plus complexe.

La solution à ce problème objet de l'invention est : un dispositif tel que revendiqué dans la revendication 1.

De manière avantageuse, la capacité a une valeur supérieure à environ 0,1 nanofarad, notamment de l'ordre du nanofarad ; le dispositif comporte en outre au moins une résistance électrique ; la résistance électrique se caractérise par une valeur supérieure à environ 1 ohm, notamment de l'ordre de 10 ohms ; la résistance est une self inductance ; la self inductance se caractérise par une valeur supérieure à environ 50 nanohenry, notamment 500 nanohenry ; la capacité est connectée électriquement, d'une part, à un premier plot ou à une première plage du dispositif à circuit intégré et, d'autre part, à un second plot ou à une seconde plage du dispositif à circuit intégré, les premier et second plots ou les première et seconde plages étant susceptibles d'être traversés par un courant d'alimentation du circuit intégré ; le premier plot est le plot de contact Vss ou la première plage est la plage de contact Vss et le second plot est le plot de contact Vdd ou la seconde plage est la plage de contact Vdd ; la self-inductance est connectée électriquement au second plot ou à la seconde plage du dispositif à circuit intégré et mise en série avec la capacité ; la capacité est intégrée dans une couche supplémentaire d'une puce ; des sous-couches formant électrodes de la capacité sont raccordées électriquement à des plots du dispositif à circuit intégré ; la self inductance se présente sous la forme d'une spirale, intégrée à une face active d'une couche de base du dispositif à circuit intégré.

L'invention sera mieux comprise à la lecture de l'exposé non limitatif qui suit, rédigé au regard des dessins annexés, dans lesquels :
- la figure 1 montre, en vue de dessus, une partie d'une carte équipée d'un dispositif à circuit intégré selon l'invention ;
- la figure 2 montre, de manière schématique, un dispositif à circuit intégré selon l'invention ;
- la figure 3 est une représentation électrique schématique d'un dispositif à circuit intégré selon l'invention ;
- la figure 4 illustre, en vue de dessus, un dispositif à circuit intégré selon l'invention ;
- la figure 5 illustre, en coupe transversale, un circuit intégré selon l'invention ;
- la figure 6 est une vue de dessus d'une face active d'un dispositif à circuit intégré selon l'invention ;
- la figure 7 représente une cellule logique élémentaire CMOS d'un dispositif à circuit intégré selon l'invention ;
- la figure 8 présente des signaux caractéristiques Vin et i_{dd} de la cellule logique élémentaire CMOS de la figure 7 ; et
- la figure 9 montre des chronogrammes de trois signaux.

Les cartes à puce sont des objets portatifs standards fonctionnant avec contact et qui sont définis notamment dans les normes ISO 78-10 et 78-16 dont le contenu est incorporé dans le présent exposé de l'invention, par citation de référence.

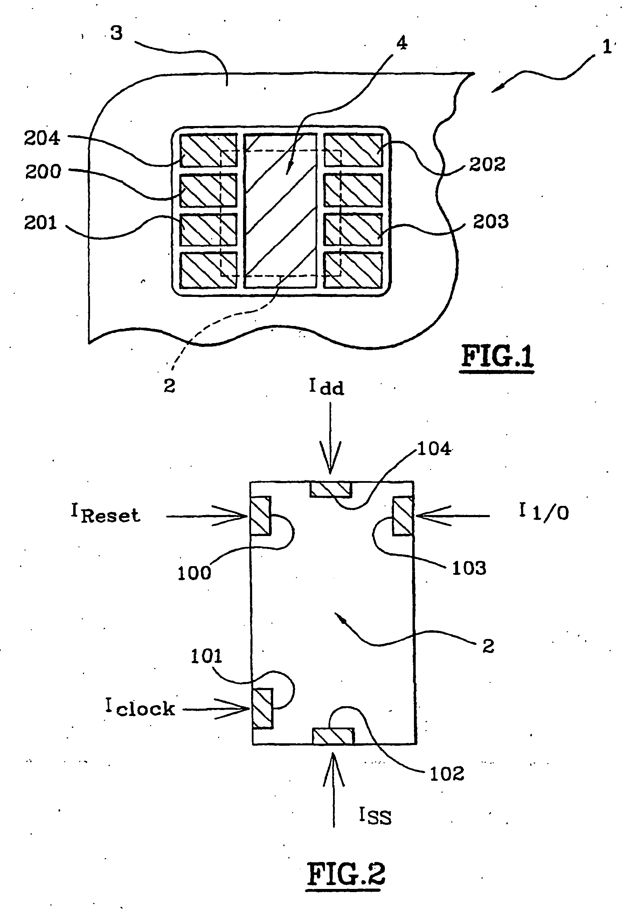

Ainsi que cela est plus particulièrement montré aux figures 1 et 2, les cartes 1 ayant un mode de fonctionnement à contacts comprennent une puce 2 à circuit intégré dont cinq plots de contact au moins 100, 101, 102, 103 et 104 sont connectés électriquement, par des fils conducteurs non représentés, à, respectivement, cinq plages de contact 200, 201, 202, 203 et 204 affleurantes à la surface du corps 3 de carte. Un plot de contact Reset 100 est connecté à une plage de contact Reset 200, un plot de contact Clock 101 est connecté à une plage de contact Clock 201, un plot de contact Vss 102 est connecté à une plage de contact Vss 202, un plot de contact I/O 103 est connecté à une plage de contact I/O 203 et un plot de contact Idd 104 est connecté à une plage de contact Vdd 204.

Les plots de contact 100, 101, 102, 103 et 104, de même que les plages de contact 200, 201, 202, 203 et 204, sont susceptibles d'être traversés par des courants respectifs d'intensité I_{Reset}, I_{Clock}, Iₛₛ, I_{I/O} et I_{dd}.

L'ensemble, puce 2, fils conducteurs et plages de contact 200, 201, 202, 203 et 204 est en général compris dans un module électronique 4 incorporé dans le corps 3 de carte.

Le dispositif à circuit intégré selon l'invention est notamment le module électronique 4 portant les plages 200, 201, 202, 203 et 204 et comportant une puce, ou alors, la puce 2 elle-même.

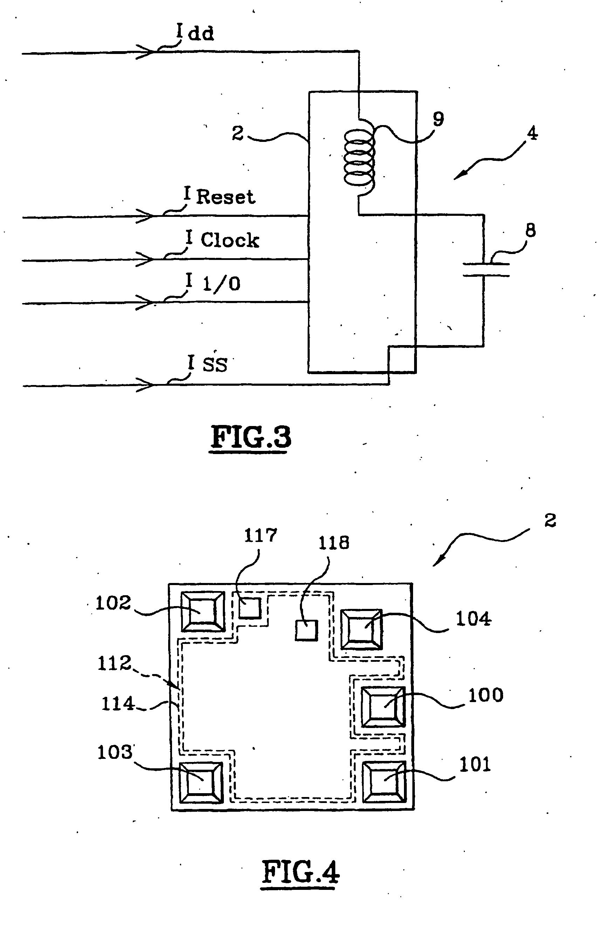

Ainsi que cela est plus particulièrement montré à la figure 3, il apparaît que, selon l'invention, le dispositif à circuit intégré comporte une capacité 8. Cette capacité 8 se caractérise par une valeur supérieure à environ 0,1 nanofarad, notamment de l'ordre du nanofarad. Elle est apte à atténuer l'amplitude des pics du courant consommé par le circuit intégré du dispositif selon l'invention.

En outre, le dispositif à circuit intégré selon l'invention comporte avantageusement une résistance électrique. Cette résistance électrique se caractérise par une valeur supérieure à environ 1 Ohm, notamment de l'ordre de 10 Ohms. Elle est préférentiellement constituée par une self inductance 9. Cette self inductance 9 se caractérise elle-même par une valeur supérieure à environ 50 nanohenry, notamment 500 nanohenry.

La capacité 8 est connectée électriquement, d'une part, au plot 102 de la puce 2 ou à la plage 202 du module électronique comportant ladite puce 2 et, d'autre part, au plot 104 de la puce 2 ou à la plage 204 du module électronique 4. Dans le cas avantageux où le dispositif comporte en outre une résistance électrique préférentiellement constituée par la self inductance 9, cette self inductance 9 est connectée électriquement au plot 104 de la puce 2 ou à la plage 204 du module électronique 4 comportant ladite puce 2 et mise en série avec la capacité 8.

En définitive, l'ensemble capacité 8 et self inductance 9 constitue une cellule de filtrage passe-bas, cette cellule de filtrage étant au moins constituée d'une capacité 8, préférentiellement d'une capacité 8 et d'une résistance, la résistance étant plus préférentiellement une self inductance 9, ladite cellule de filtrage se trouvant dans le module électronique 4, avantageusement au voisinage immédiat du circuit intégré.

Dans le mode de réalisation présenté ci-dessous au regard des figures 4, 5 et 6, la puce 2 comporte la capacité 8 et la self inductance 9.

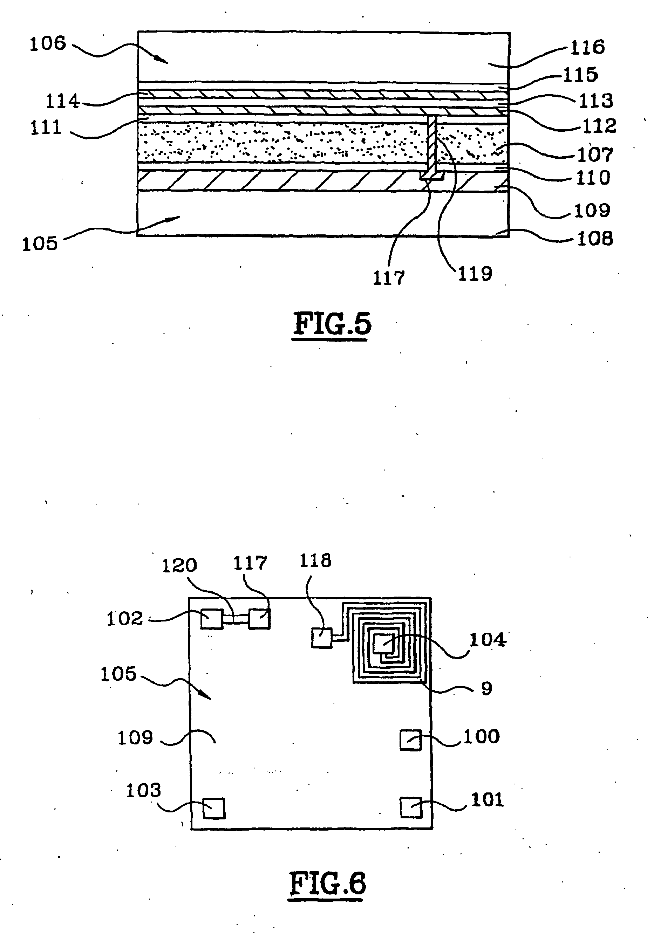

Si l'on se rapporte tout d'abord à la figure 5, il apparaît que la puce 2 comporte trois couches principales. Il s'agit d'une première couche de base 105, d'une couche supplémentaire 106, lesdites première et seconde couches étant liées par une couche intermédiaire 107 de scellement.

La couche 105 se compose de trois sous-couches, une sous-couche 108 de silicium, une sous-couche 109 d'intégration du circuit, lesdites sous-couches 108 et 109 étant recouvertes d'une sous-couche 110 de passivation.

La couche 106 se compose de six sous-couches, une sous-couche 111 isolante, une sous-couche 112 conductrice, par exemple à base de Tantale, formant une première électrode de la capacité 8, une sous-couche 113 isolante et diélectrique, par exemple d'oxyde de Tantale, une sous-couche 114 conductrice, par exemple à base de Tantale, formant une seconde électrode de la capacité 8, une sous-couche 115 isolante et une sous-couche 116 de silicium ou d'un autre matériau.

La couche 107 de scellement ne se subdivise pas en sous-couches. Elle se compose d'un agent de scellement par exemple polymérique. Il s'agit en particulier d'un polyimide.

Dans un exemple, l'épaisseur des sous-couches 110, 111, 112; 113, 114 et 115 est de l'ordre de quelques milliers d'angström, l'épaisseur de la sous-couche 109 et de la couche 107 est de l'ordre de 5 µm, l'épaisseur de la sous-couche 108 est de l'ordre de 50 µm et l'épaisseur de la couche 116 est de l'ordre de 150 µm.

La capacité 8 est ainsi intégrée dans la couche 106 supplémentaire. Les sous-couches 112 et 114 formant électrodes sont raccordées électriquement à des plots d'inter-connexion 117, 118 du circuit intégré, par des vias ou des bossages conducteurs 119.

Ainsi que cela est plus particulièrement montré à la figure 6, la self inductance 9 se présente sous la forme d'une spirale intégrée à la face active de la couche 105 de base. Ses deux bornes de connexion sont connectées, l'une au plot de contact Idd 104, l'autre au plot d'inter-connexion 118.

Le plot d'interconnexion 117 est connecté au plot de contact Vss 102 par un circuit de connexion 120 qui est avantageusement le moins résistif possible.

Ainsi que cela apparaît clairement à la figure 4, les couches 106 et 107 sont percées de trous à l'aide de techniques de micro-usinage. Ces trous permettent d'établir des liaisons par câblage thermosonique entre les plots 100, 101, 102, 103 et 104 affleurant à la face active de la couche 105 de base et les plages de contact 200, 201, 202, 203 et 204 du module électronique 4.

Dans un dispositif à circuit intégré, le circuit intégré forme une structure d'assemblage complexe de cellules logiques dans lesquelles une unité centrale de traitement (CPU) distribue et gère, par l'intermédiaire d'un bus de données et d'un bus d'adresses, des informations stockées dans des mémoires RAM, ROM ou EEPROM dudit circuit. Eventuellement, le circuit intégré forme en outre un micro-contrôleur associé à la CPU, ledit micro-contrôleur étant plus particulièrement destiné au codage cryptographique de données nécessitant des structures de calcul spécialisées. Ce micro-contrôleur est alors appelé cryptoprocesseur.

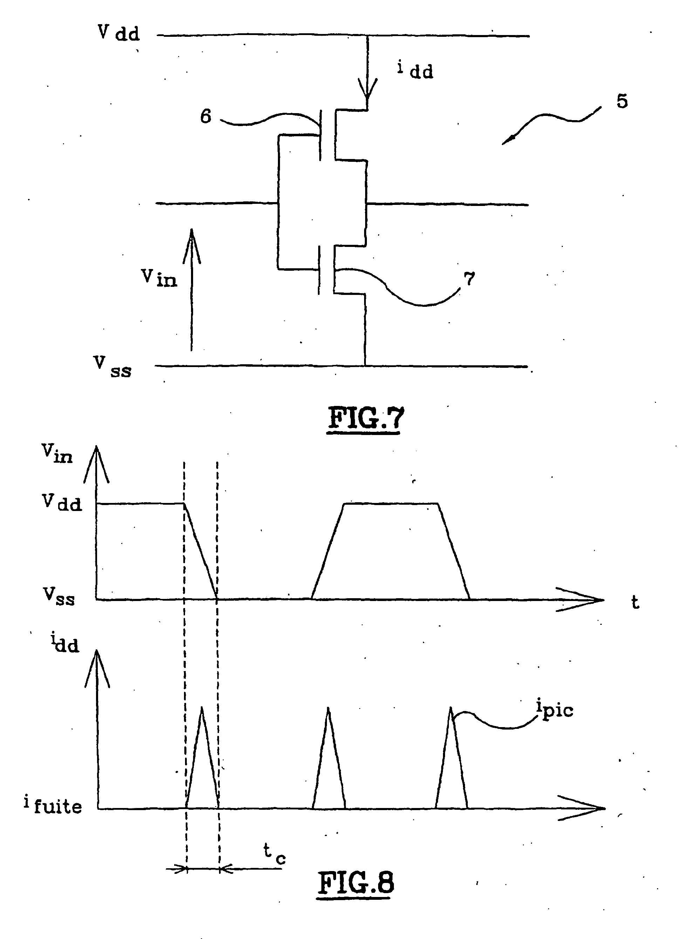

A la figure 7, on a représenté une cellule logique 5 élémentaire d'un dispositif à circuit intégré selon l'invention. Cette cellule 5 est du type CMOS. Elle est constituée d'un premier transistor MOS 6 de type P et d'un second transistor MOS 7 de type N, lesdits transistors 6, 7 étant montés en série. Chaque cellule 5 est commandée par un signal logique de commande Vin commun aux deux transistors 6, 7.

Soit idd, l'intensité du courant consommé par la cellule 5.

Aux deux états stables, c'est-à-dire aux états logiques 0 et 1, seul un 6 ou 7 des deux transistors est conducteur ou passant, l'autre transistor 7 ou 6 étant bloqué ou non-passant. L'intensité du courant i_{dd} consommé par la cellule 5 est alors égale à une valeur i_{fuite} de courant de fuite, cette valeur étant sensiblement constante au cours du temps et dépendante en particulier de la température. En pratique, i_{fuite} est de l'ordre du nanoampère.

Par contre, lorsqu'on applique une tension de commande Vᵢₙ aux bornes d'entrée de la cellule 5, et que Vᵢₙ est supérieure à une valeur de seuil permettant la commutation des transistors 6, 7 de ladite cellule 5 d'un état stable à un autre état stable, cette cellule 5 est, pendant un intervalle de temps t_{c}, dans un état transitoire non-stable, intermédiaire entre les états logiques 0 et 1. Les transistors 6 et 7 sont alors conducteurs et i_{dd} est égal à i_{comm} bien supérieur à i_{fuite} et qui culmine à une valeur d'intensité i_{pic} dont la valeur est, dans l'invention, de quelques dizaines de microampères.

En analysant les variations de l'intensité du courant Idd, il serait possible, d'une part, d'en déduire les changements d'états de cellules logiques élémentaires 5 qui participent aux flux d'informations entre les divers sous-ensembles du circuit intégré RAM, EEPROM, ROM et cryptoprocesseur puis, d'autre part, d'interpréter le fonctionnement du circuit intégré.

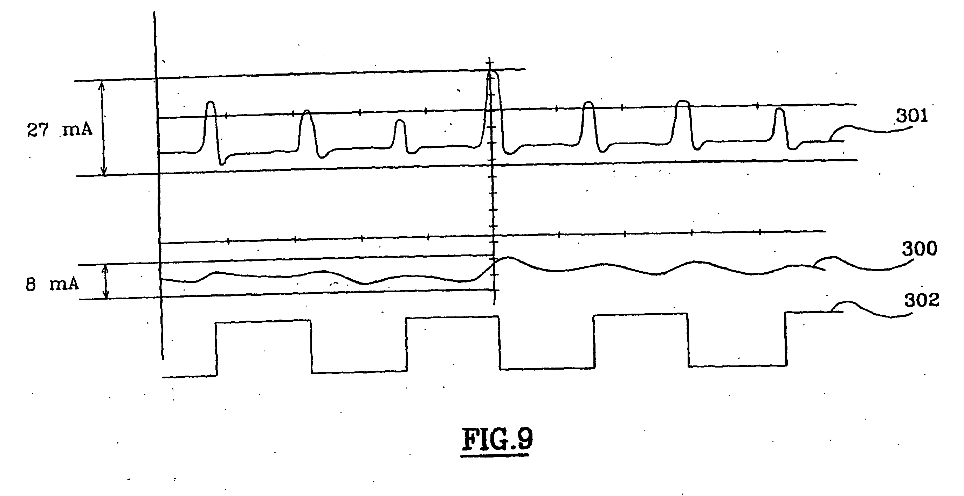

A la figure 9, une courbe 300 représente l'intensité du courant Idd consommé dans un dispositif à circuit intégré selon l'invention en fonction du temps, une courbe 301 représente l'intensité du courant Idd consommé dans un dispositif selon l'état de la technique en fonction du temps, les courbes 300 et 301 étant rapprochées d'une courbe 302 représentative du signal d'horloge qui pilote ledit dispositif à circuit intégré.

Les dispositifs à circuit intégré selon l'invention et selon l'état de la technique à l'origine respectivement, des courbes 300 et 301 consomment à la fois sur le front montant et sur le front descendant de l'horloge. On notera que cela n'est cependant pas toujours le cas. En effet, certains dispositifs à circuits intégrés consomment sur un seul des deux fronts de l'horloge et d'autres possèdent des moyens multiplicateurs de fréquence et le nombre de pics de courant par période d'horloge est alors supérieur à deux.

La courbe 301 montre des pics d'intensité du courant Idd consommé dont la hauteur ou amplitude est de l'ordre de 27 mA. Ces pics constituent une signature de l'ensemble des tâches accomplies par le circuit intégré. En analysant finement la courbe 301 en association avec une transaction, il est alors possible de comprendre le fonctionnement du circuit intégré et d'extraire des informations confidentielles. C'est une méthode d'investigation non destructive qui porte atteinte à la sécurité des données et des transactions.

La courbe 300 montre par contre des pics d'intensité du courant Idd consommé dont la hauteur est de l'ordre de 8 mA. Aussi, grâce à la présence de la capacité 8, et de la self inductance 9, la hauteur des pics a été réduite de plus de 50 %. L'analyse fine de la courbe 300 en association avec une transaction se révèle ainsi particulièrement complexe. Il n'est plus possible d'extraire simplement des informations confidentielles par une méthode d'investigation non destructive.

Par ailleurs, compte tenu du fait que des chutes de tension brutales dues à des variations importantes de l'intensité du courant d'alimentation Idd sont susceptibles d'entraîner, au cours du fonctionnement d'un dispositif à circuit intégré selon l'état de la technique et dans le cas où lesdites chutes amènent la tension au-dessous d'un seuil dit de détection nominale de fonctionnement, une nouvelle initialisation voire une perte de données et des erreurs d'écriture à l'origine de défaut d'intégrités des données, l'atténuation des signatures électriques et par suite l'absence de chutes de tension dans un dispositif selon l'invention apporte donc un avantage supplémentaire.

On notera que la structure des circuits intégrés CMOS est telle qu'un dispositif à circuit intégré peut être alimenté, de manière dégradée, par ses plots de contact Reset 100, I/O 103 voire Clock 101. Ces plots autres que les plots d'alimentation Vss et Vdd sont protégés contre des décharges électrostatiques, par des dispositifs non linéaires. Ces dispositifs sont principalement constitués de deux diodes reliées aux bus d'alimentations du circuit intégré. Ainsi, toute alimentation, en mode dégradé, du circuit intégré par les plots Reset, I/O et Clock, s'effectue au travers d'une diode vers l'alimentation Vdd. Ce dispositif non linéaire, associé à la capacité présente sur le Vdd, filtre le courant d'alimentation du circuit intégré. Cependant, on peut imaginer que le mode de réalisation exposé dans la présente description au regard des plots Vss et Vdd peut être appliqué aux plots 100, 101 ou 103 pour l'atténuation de signatures de la consommation électrique du circuit intégré sur ces plots.

On notera d'autre part que si l'on retire la capacité du dispositif par exemple en tentant de détacher la couche 106, la self inductance 9 se retrouve en série dans le circuit intégré qui ne peut plus alors fonctionner.

On notera enfin que les puces à circuit intégré selon l'invention peuvent être réalisées par lots, sous la forme de tranches de silicium appelées wafer. En ce qui concerne les fabrications de puces par lots, on se reportera à la demande de brevet enregistrée en France sous le numéro 97/10764, qui n'a pas été rendue accessible au public.

Bien entendu, la présente invention est susceptible de venir compléter l'efficacité des routines de programmation en filtrant à l'aide d'une cellule analogique les transitoires de courant qui accompagnent l'ensemble des tâches d'un circuit intégré pour carte à puce.

## Revendications

1. Dispositif à circuit intégré incorporé dans une carte à puce à contacts, **caractérisé en ce qu'**il comporte au moins une capacité (8) apte à atténuer l'amplitude de pics du courant consommé par le circuit intégré dudit dispositif traversant un plot de contact d'alimentation en tension (Vdd 104) du circuit intégré, ledit plot étant connecté à la plage de contact d'alimentation (204) de ladite carte.

2. Dispositif selon la revendication 1, **caractérisé en ce que** la capacité (8) a une valeur supérieure à environ 0,1 nanofarad, notamment de l'ordre du nanofarad.

3. Dispositif selon l'une des revendications 1 ou 2, **caractérisé en ce qu'**il comporte en outre au moins une résistance électrique.

4. Dispositif selon la revendication 3, **caractérisé en ce que** la résistance électrique se **caractérise par** une valeur supérieure à environ 1 ohm, notamment de l'ordre de 10 ohms.

5. Dispositif selon l'une des revendications 3 ou 4, **caractérisé en ce que** la résistance est une self inductance (9).

6. Dispositif selon la revendication 5, **caractérisé en ce que** la self inductance (9) se **caractérise par** une valeur supérieure à environ 50 nanohenry, notamment 500 nanohenry.

7. Dispositif selon l'une des revendications précédentes, **caractérisé en ce que** la capacité (8) est connectée électriquement, d'une part, audit plot ou à ladite plage du dispositif à circuit intégré et, d'autre part, à un second plot ou à une seconde plage du dispositif à circuit intégré, lesdits plots ou lesdites plages étant susceptibles d'être traversés par un courant d'alimentation du circuit intégré.

8. Dispositif selon la revendication 7, **caractérisé en ce que** ledit second plot est le plot de contact Vss (102) ou ladite seconde plage est la plage de contact Vss (202) et **en ce que** ledit plot est le plot de contact Vdd (104) ou ladite plage est la plage de contact Vdd (204).

9. Dispositif selon l'une des revendications 7 ou 8, **caractérisé en ce que** la self-inductance (9) est connectée électriquement audit plot ou à ladite plage du dispositif à circuit intégré et mise en série avec la capacité (8).

10. Dispositif selon l'une des revendications précédentes, **caractérisé en ce que** la capacité (8) est intégrée dans une couche supplémentaire (106) d'une puce (2).

11. Dispositif selon la revendication 10, **caractérisé en ce que** des sous-couches (112) et (114) formant électrodes de la capacité (8) sont raccordées électriquement à des plots (117, 118) du dispositif à circuit intégré.

12. Dispositif selon l'une des revendications 5 à 11, **caractérisé en ce que** la self-inductance (9) se présente sous la forme d'une spirale intégrée à une face active d'une couche (105) de base du dispositif à circuit intégré.

## Claims

1. An integrated circuit device incorporated into a contact type smart card, **characterised in that** it comprises at least one capacitance (8) capable of attenuating the amplitude peaks of the current consumed by the integrated circuit of the said device flowing through a voltage supply bump contact (Vdd 104) of the integrated circuit, where the said bump contact is connected to the power supply contact bonding pad (204) of the said card.

2. A device according to claim 1, **characterised in that** the capacitance (8) has a value greater than approximately 0.1 nanofarad, particularly of the order of a nanofarad.

3. A device according to any of claims 1 or 2, **characterised in that** it further comprises at least one electrical resistor.

4. A device according to claim 3, **characterised in that** the electrical resistor is **characterised by** a value greater than approximately 1 ohm, particularly of the order of 10 ohms.

5. A device according to any of claims 3 or 4, **characterised in that** the resistor is an induction coil (9).

6. A device according to claim 5, **characterised in that** the induction coil (9) is **characterised by** a value greater than approximately 50 nanohenries, particularly 500 nanohenries.

7. A device according to any of the foregoing claims, **characterised in that** the capacitance (8) is connected electrically to the said bump contact or the said bonding pad of the integrated circuit device on the one hand and to a second bump contact or a second bonding pad of the integrated circuit device on the other, the said bump contacts or bonding pads being capable of allowing the flow of a power supply current of the integrated circuit.

8. A device according to claim 7, **characterised in that** the said second bump contact is the bump contact Vss (102) or the said second bonding pad is the bonding pad Vss (202) and **in that** the said bump contact is the bump contact Vdd (104) or the said bonding pad is the bonding pad Vdd (204).

9. A device according to any of claims 7 or 8, **characterised in that** the induction coil (9) is electrically connected to the said bump contact or the said bonding pad of the integrated circuit device and connected in series with the capacitance (8).

10. A device according to any of the foregoing claims, **characterised in that** the capacitance (8) is integrated in an additional layer (106) of a chip (2).

11. A device according to claim 10, **characterised in that** the sub-layers (112) and (114) forming the electrodes of the capacitance (8) are connected electrically to bump contacts (117, 118) of the integrated circuit device.

12. A device according to any of claims 5 to 11, **characterised in that** the induction coil (9) takes the form of a spiral integrated into an active side of a base layer (105) of the integrated circuit device.

## Patentansprüche

1. Vorrichtung mit in einer Kontaktchipkarte eingebautem integriertem Schaltkreis **dadurch gekennzeichnet, dass** sie mindestens eine Kapazität (8) aufweist, die dazu geeignet ist, die Spitzenstromamplitude des vom integrierten Schaltkreis der genannten Vorrichtung verbrauchten Strom zu dämpfen, der einen Kontaktklotz zur Spannungsversorgung (Vdd 104) des integrierten Schaltkreises durchströmt, wobei der genannte Klotz mit dem Versorgungskontaktbereich (204) der genannten Karte gekoppelt ist.

2. Vorrichtung nach Anspruch 1, **dadurch gekennzeichnet, dass** die Kapazität (8) einen Wert hat, der größer ist als etwa 0,1 Nanofarad, der insbesondere in der Größenordnung des Nanofarads liegt.

3. Vorrichtung nach einem der Ansprüche 1 oder 2, **dadurch gekennzeichnet, dass** sie außerdem mindestens einen elektrischen Widerstand aufweist.

4. Vorrichtung nach Anspruch 3, **dadurch gekennzeichnet, dass** sich der elektrische Widerstand durch einen Wert kennzeichnet, der größer ist als etwa 1 Ohm, der insbesondere in der Größenordnung von 10 Ohms liegt.

5. Vorrichtung nach einem der Ansprüche 3 oder 4, **dadurch gekennzeichnet, dass** der Widerstand eine Induktionsspule (9) ist.

6. Vorrichtung nach Anspruch 5, **dadurch gekennzeichnet, dass** sich die Induktionsspule (9) durch einen Wert kennzeichnet, der größer ist als etwa 50 Nanohenry, der insbesondere 500 Nanohenry beträgt.

7. Vorrichtung nach einem der vorangehenden Ansprüche, **dadurch gekennzeichnet, dass** die Kapazität (8) einerseits an den genannte Klotz oder an den genannten Bereich der Vorrichtung mit integriertem Schaltkreis und andererseits an einen zweiten Klotz oder an einen zweiten Bereich der Vorrichtung mit integriertem Schaltkreis elektrisch gekoppelt ist, wobei die genannten Klötze oder die genannten Bereiche durch eine Versorgungsspannung des integrierten Schaltkreises durchströmbar sind.

8. Vorrichtung nach Anspruch 7, **dadurch gekennzeichnet, dass** der genannte zweite Klotz der Vss - Kontaktklotz (102) oder dass der genannte zweite Bereich der Vss - Kontaktbereich (202) ist und dass der genannte Klotz der Vdd - Kontaktklotz (104) oder dass der genannte Bereich der Vdd - Kontaktbereich (204) ist.

9. Vorrichtung nach einem der Ansprüche 7 oder 8, **dadurch gekennzeichnet, dass** die Induktionsspule (9) mit dem genannten Klotz oder mit dem genannten Bereich der Vorrichtung mit integriertem Schaltkreis elektrisch gekoppelt ist und mit der Kapazität (8) in Serie geschaltet ist.

10. Vorrichtung nach einem der vorangehenden Ansprüche, **dadurch gekennzeichnet, dass** die Kapazität (8) in einer zusätzlichen Schicht (106) eines Chips (2) integriert ist.

11. Vorrichtung nach Anspruch 10, **dadurch gekennzeichnet, dass** Elektroden (8) der Kapazität bildende Unterschichten (112) und (114) mit Klotzen (117, 118) der Vorrichtung mit integriertem Schaltkreis elektrisch verbunden sind.

12. Vorrichtung nach einem der Ansprüche 5 bis 11, **dadurch gekennzeichnet, dass** die Induktionsspule (9) die Form einer in eine aktiven Seite einer Grundschicht (105) der Vorrichtung mit integriertem Schaltkreis integrierte Spirale hat.
